**Europäisches Patentamt**

(19) **European Patent Office**

**Office européen des brevets**

(11) Veröffentlichungsnummer: **0 008 462**
**B1**

(12) **EUROPÄISCHE PATENTSCHRIFT**

(45) Veröffentlichungstag der Patentschrift:
24.06.81

(21) Anmeldenummer: **79103095.0**

(22) Anmeldetag: **23.08.79**

(51) Int. Cl.³: **B 01 F 3/04** // A01C3/02,
C02F3/14

(54) Umwälzbelüfter für Flüssigkeiten.

(30) Priorität: 24.08.78 DE 2837002
26.04.79 DE 2916845

(43) Veröffentlichungstag der Anmeldung:
05.03.80 Patentblatt 80/5

(45) Bekanntmachung des Hinweises auf die Patenterteilung:
24.06.81 Patentblatt 81/25

(84) Benannte Vertragsstaaten:
AT BE CH FR NL

(56) Entgegenhaltungen:
AT-B-346 255
CH-A-593 712
DE-A-2 408 794
DE-A-2 415 813
DE-A-2 505 523
FR-A-1 238 593

(73) Patentinhaber: Reck, Anton, Bussenstrasse 133,
D-7941 Betzenweiler (DE)

(72) Erfinder: Reck, Anton, Bussenstrasse 133,
D-7941 Betzenweiler (DE)

(74) Vertreter: Eisele, Eberhard, Dipl.-Ing., Goetheplatz 7,
D-7980 Ravensburg (DE)

ACTORUM AG.

Umwälzbelüfter für Flüssigkeiten

Die Erfindung bezieht sich auf einen Umwälzbelüfter für Flüssigkeiten mit mehreren dicht aneinander gerückt auf einer Welle befestigten Propellern, einer mit ihrer hohlen Seite den Propellern zugewandten koaxialen Haube und mit einem länglichen, längs der Welle angeordneten Trichter, der mit seinem unteren Ende an der Haube angeschlossen ist.

Ein Umwälzbelüfter dieser Art ist aus dem deutschen Gebrauchsmuster Nr. 17 14 336 bekannt. Er wird dort als Begasungsrührer bezeichnet und weist einen die Propellerwelle umhüllenden schlanken Trichter auf, an dessen unterem dünnen Ende das Gas durch einen ringförmigen, mit der Propellerwelle gleichachsigen Hohlquerschnitt in die Haube übertritt. Es sind zwei gegeneinander arbeitende Propeller vorgesehen, die beide von der Haube überdeckt sind.

Der Erfindung liegt die Aufgabe zugrunde, einen insbesondere für Flüssigdunggruben geeigneten Umwälzbelüfter vorzuschlagen, der es ermöglicht, mit verhältnismässig geringer Propeller-Antriebsenergie viel Luft in fein verteilter Form in den Flüssigdung einzutragen und dabei die folgenden drei Bedingungen gleichzeitig zu erfüllen, nämlich

- das gesamte Grubenvolumen umzuwälzen (Rundlauf),
- eine vorhandene Schwimmdecke zu zerstören und die Neubildung einer solchen zu vermeiden,
- den entstehenden Schaum wirkungsvoll zu bekämpfen.

Dies ist mit dem vorerwähnten bekannten Umwälzbelüfter nicht möglich. Dessen beide Propeller arbeiten gegeneinander, so das kein wirksamer Axialstrahl zustande kommt, der weit in die Grube reicht und stark genug wäre, das ganze Volumen in Bewegung zu bringen. Die Haube deckt beide vorhandenen Propeller ab, weshalb keine Fräswirkung an der Unterseite der Schwimmdecke zustande kommen kann. Weil schliesslich der Trichter konzentrisch an der Haube angeschlossen ist, der Schaum also im wellennahen Bereich mit den Flügeln des oberen Propellers in Berührung kommt, wird nicht genügend Schaum vernichtet.

Andere bekannte Umwälzbelüfter, die speziell für Flüssigdung konstruiert sind, haben neben der Nichterfüllung einer oder mehrerer der vorgenannten Bedingungen den Nachteil, dass die Luft so grobblasig in die Flüssigkeit eingebracht wird, dass sie nur kurze Zeit mit der Flüssigkeit in Berührung ist. Infolgedessen bringen die im Dung enthaltenen aeroben Mikroorganismen Temperaturen von bis zu 50° Celsius nicht zustande, wie sie bei Dunglegen traditioneller Art beobachtet werden.

Solch hohe Temperaturen sind jedoch erwünscht, damit Unkrautsamen, Eier von Parasitenträgern, pathogene Keime und Salmonellenstämme vernichtet werden. Hohe Dungtemperaturen haben ferner die Wirkung, dass die Düngenährstoffe gebunden und damit für die Pflanzen besser verfügbar werden. Giftstoffe verschwinden, z.B. ist nach bisherigen Erkenntnissen die Reduzierung des Nitritgehaltes im Spinat feststellbar. Der Flüssigdung ätzt nicht mehr und kann sogar bei Sonnenschein zur Kopfdüngung verwendet werden. Alles deutet darauf hin, dass bei Kulturen, denen derart biologisch behandelter Flüssigdung zugeführt worden ist, hochgiftige Spritzmittel (möglicherweise krebserregende Wuchsstoffe) eher entbehrlich sind als sonst. Und schliesslich kann durch verstärkte oxidative Gärung und damit einhergehende Temperaturerhöhung der Flüssigdung nahezu geruchfrei gemacht werden.

Die gestellte Aufgabe wird ausgehend von einem Umwälzbelüfter der eingangs bezeichneten Art erfindungsgemäss dadurch gelöst, dass die Welle schräg angeordnet ist, dass sämtliche Propeller axial in gleicher Richtung fördern, dass die Haube nur den oberen Propeller umschliesst, und dass ein Schaumtrichter neben der Welle angeordnet und exzentrisch an der Haube angeschlossen ist.

Die Schräglage der Welle begünstigt, wie im folgenden gezeigt wird, den Rundlauf des Grubeninhalts und die Zerstörung der Schwimmdecke. Die Propellergruppe erzeugt insgesamt eine stärkere in Verlängerung der Propellerwelle schräg nach unten gerichtete Strömung als ein Propeller allein. Durch diese erhöhte Strahlwirkung ist es möglich, mit der Strömung auch in die Ecken rechteckiger Dunggruben zu gelangen und somit den gesamten Inhalt auch solcher Gruben in Umlauf zu bringen. Die Propelleranzahl kann der erforderlichen Strömungsleistung aufgrund des Grubeninhaltes und der Grubenform angepasst werden. Man muss sich dabei vor Augen halten, dass einer Vergrösserung der Propellerdurchmesser durch die verhältnismässig kleinen Grubenöffnungen schon vorhandener Flüssigdunggruben Grenzen gesetzt sind.

Eine Schwimmdecke, die sich in Flüssigdunggruben vorzugsweise dann bildet, wenn in dem Dung Langstroh- und Futterreste enthalten sind, wird durch eine solche Umlaufströmung aufgebrochen und kommt in Bewegung. Vor allem wenn die Propeller nur wenig unterhalb der Flüssigkeitsoberfläche angeordnet sind, beispielsweise 5 bis 20 cm, ist der schräg zur Propellerwelle hin gerichtete Sog der Propellergruppe so stark, dass Bruchstücke der Schwimmdecke mit den Propellern in Berührung kommen und dadurch vollends zerschlagen werden. Die Folge ist eine einwandfreie Homogenisierung des gesamten Grubeninhalts.

Die enge Aneinanderreihung mehrerer Propeller hat auch den Vorteil, dass die Luftbläschen in mehreren hintereinandergeschalteten Verfahrensabschnitten immer weiter zerschlagen werden. Dabei verhindert die besonders grosse Strömungsgeschwindigkeit eine frühe Wiedervereinigung dieser feinsten Bläschen, so dass die Luft auch in tiefe Schichten gelangt und nur verhältnismässig langsam aufsteigt. Die entscheidende Ursache für diesen Effekt ist die Vervielfachung der Abreisskanten, denn nur dort findet eine Zerschlagung der Luftbläschen und die erwünschte innige Vermischung mit der Flüssigkeit statt. Im Sinne einer weiteren Verbesserung in dieser Hinsicht sollten die Propellerflügelflächen zusätzlich eine kantige Struktur aufweisen, z.B. Leisten oder scharfkantige Rippen tragen oder mit scharfkantigen Durchbrüchen oder Vertiefungen versehen sein.

Durch den Schaumtrichter wird Luft, Schaum oder ein Gemisch aus beiden angesaugt. Da er nicht von der Propellerwelle durchsetzt ist und exzentrisch in die Haube mündet, ist zwar der Querschnitt des Ansaugkanals verhältnismässig klein. Sein Durchmesser ist jedenfalls kleiner als der Halbmesser der Haube. Trotzdem ist die Ansaugwirkung grösser als bei vergleichbaren bekannten Umwälzbelüftern, was darauf zurückzuführen ist, das die Mündungsöffnung des Ansaugkanals radial bis zum Rand der Haube reicht. Zwischen den von der Haube umschlossenen Propellerflügeln bilden sich Unterdruckzellen, die nicht wie bei den bekannten Geräten innerhalb des Ansaugquerschnitts kurzgeschlossen sind, sondern seitlich nacheinander an der Ansaugkanalmündung Luft oder Schaum aufnehmen. Das begünstigt insbesondere die Schaumbekämpfung.

Während die Haube vorzugsweise kegelförmig ausgebildet ist, hat der Schaumtrichter querschnittlich die Form eines Kreisabschnittes mit ausgerundeten Ecken und ist mit dem flachen Wandabschnitt nach oben gewendet unter der Propellerwelle angeordnet. Es kann aber auch wenigstens ein weiterer Schaumtrichter über einen eigenen Ansaugkanal an der Haube exzentrisch angeschlossen sein. Unabhängig davon, ob einer oder mehrere Schaumtrichter vorgesehen sind, wird ferner vorgeschlagen, den einzelnen Schaumtrichter derart abzuschrägen und so anzuordnen, dass sein Einlaufrand etwa horizontal und in einem deutlichen Abstand über dem Flüssigkeitsspiegel liegt. Dadurch ergibt sich ein verhältnismässig grosser Schaumeinlassquerschnitt, was für die Aufnahme grosser Schaummengen genau so wichtig ist wie die als «Trichtereffekt» zu bezeichnende Erscheinung, wonach sich der Schaum infolge kontinuierlicher Querschnittsverengung langsam auf die hohe Ansauggeschwindigkeit beschleunigt.

So wichtig die Schaumbekämpfung bei übermässiger Schaumentwicklung sein mag, hat der Schaum durchaus auch positive Aspekte. So wirkt er schalldämmend im Hinblick auf das Propellergeräusch und geruchsdämmend, insbesondere wird das Austreten freien Ammoniaks verhindert. Schaum ist auch wärmedämmend, was vor allem dann Bedeutung hat, wenn die erreichten Flüssigkeitstemperaturen über 40° Celsius hinausgehen und im Intervallbetrieb gerührt werden soll. Längere Rührpausen verlangen geradezu eine ordentliche Schaumschicht. Zur Schaumhöhenregulierung ist es möglich, den Schaumtrichter bezüglich der Welle neigbar an der Haube anzuschliessen, z.B. mittels eines Rohrgelenkes, und ihn mit einem eigenen Schwimmer auszurüsten. Auf diese Weise lässt sich ein konstanter Höhenabstand zwischen dem Einlaufrand des Trichters und dem Flüssigkeitsspiegel aufrechterhalten. Andererseits können aber auch Schaumtrichter über bewegliche Schläuche angeschlossen und frei schwimmend ausgebildet sein.

Im Vergleich mit anderen bekannten Vorrichtungen zur Flüssigkeitsbegasung, die Schaumtrichter mit über dem Flüssigkeitsspiegel befindlichem Einlaufrand aufweisen, hat der erfindungsgemässe Umwälzbelüfter den Vorteil, dass weder der Strömungsweg für die Flüssigkeit noch derjenige für Luft und Schaum durch Bruchstücke der Schwimmdecke, Langstrohreste oder dgl. verstopfen kann. Der Schaumtrichter wird vielmehr absichtlich so hoch gestellt, dass schwimmende Teile nicht in ihn hineingelangen können. Damit ist der enge Ansaugkanal dem Schaum, der Luft oder einem Gemisch aus beiden vorbehalten, während Schwimmteile nur mit den freizugänglichen Propellern in Berührung kommen können.

In Weiterbildung der Erfindung wird vorgeschlagen, zusätzlich zum Schaumtrichter eine vorzugsweise ausserhalb der Grube endende Gasansaugleitung an die Haube exzentrisch anzuschliessen, am einfachsten diametral gegenüber dem Trichterstutzen. Während sonst bei starker Schaumentwicklung durch den Schaumtrichter anstelle von sauerstoffhaltiger Luft ausschliesslich Schaum und das in diesem enthaltene Faulgas in die Flüssigkeit eingebracht wird, macht die zusätzliche Gasansaugleitung den Sauerstoffeintrag vom Ausmass der Schaumentwicklung unabhängig.

Ausser der Trennung von Lufteintrag einerseits und Schaumbekämpfung andererseits kann die angedeutete Mehrfachanordnung auch eine absolute Erhöhung des Gaseintrages zum Ziele haben. In anderen Anwendungsfällen als der Flüssigdungbehandlung mag es weniger darauf ankommen, mit Hilfe des Gases bestimmte Reaktionen in der Flüssigkeit hervorzurufen als umgekehrt mit Hilfe einer Flüssigkeit beispielsweise ein Gas zu entgiften. Der Umwälzbelüfter eignet sich in gleicher Weise für diese Zielsetzung, wobei das Gas ein Rauchgas oder Abgas irgendwelcher Art sein kann.

Hinsichtlich der Installation des Umwälzbelüfters wird vorgeschlagen, dass die Propellerwelle in einem Lagergestell gelagert ist, das seinerseits um eine horizontale Achse und gegebenenfalls zusätzlich um eine vertikale Achse schwenkbar gelagert ist, und dass ein am oberen Ende des Lagergestells befindlicher Antriebsmotor ein Gegengewicht bildet. Während sämtliche bekannten Umwälzbelüfter vergleichbaren Typs im Falle ihrer Verwendung in geschlossenen Dunggruben unter der Grubendecke aufgehängt oder schwimmend gelagert sind, bietet der erwähnte Vorschlag die Möglichkeit, auch bei einer Anordnung des Motors oberhalb der Grubendecke und trotz verhältnismässig kleiner Grubenöffnung die Propellerwelle hinsichtlich ihrer Neigung und gewünschtenfalls ihrer horizontalen Richtung zu verstellen. Die Welle ist dazu lediglich mittels einer längenveränderbaren Stellvorrichtung, beispielsweise einer Spindel, mit einem feststehenden Grundgestell zu verbinden. Diese Verstellmöglichkeit ist besonders bei jenen Flüssigdunggruben von Bedeutung, die ursprünglich nicht für eine künstliche Belüftung gebaut worden sind.

Kommt es weniger auf die Einstellung einer bestimmten Neigung der Propellerwelle an, so kann man den Umwälzbelüfter um die horizontale Querachse auch frei pendeln lassen und an dem bezüglich der horizontalen Achse unteren Teil des Lagergestells einen Schwimmer anordnen und zwar insbesondere mittels eines Verbindungsorgans anbinden, dessen Länge sich am oberen Teil des Lagergestells einstellen lässt. Damit lässt sich erreichen, dass unabhängig von Schwankungen des Flüssigkeitsstandes die Propellergruppe sich stets gleich weit unter dem Flüssigkeitsspiegel befindet, was bei einer Dungkonsistenz, die zur Bildung einer Schwimmdecke neigt, von grösster Wichtigkeit ist.

Der Handhabungsvorteil einer derartigen Schwimmeranbindung zeigt sich in erster Linie bei gedeckten Gruben, denn das Einbringen des Umwälzbelüfters in eine enge Grubenöffnung kann jetzt Zug um Zug erfolgen. Zunächst lockert man das Verbindungsorgan und verlängert es so weit wie möglich, um den Schwimmer vor dem übrigen Gerät allein durch die Öffnung stecken zu können. Sodann wird durch Manipulieren am oberen Teil des Lagergestells das Verbindungsorgan angezogen bzw. gekürzt und dadurch von ausserhalb der Grube und bei laufenden Propellern die Propellertiefe wie gewünscht genau eingestellt. Die gleiche Bedienungsvereinfachung ergibt sich aber auch bei Umwälzbelüftern, die an einer offenen Grube angebracht sind.

Zwangsläufig wird mit der Propellertiefe auch die Neigung der Propellerwelle verstellt, so dass die vorgeschlagene Schwimmeranbindung auch sinnvoll ist, wenn es mehr auf diese Neigung ankommt, beispielsweise um die Strömung steil nach unten auszurichten. Dadurch wird eine möglicherweise am Boden abgesetzte Feststoffschicht aufgewirbelt und der gesamte Grubeninhalt in Umlauf gebracht.

Vorzugsweise wird als Verbindungsorgan ein Zugstrang, etwa ein Seil oder eine Kette, verwendet, mit einem Ende am Schwimmer befestigt, über ein am unteren Teil des Lagergestells angebrachtes Umlenkorgan geführt und mit dem anderen Ende am oberen Teil des Lagergestells verstellbar festgelegt. Das Verbindungsorgan könnte aber auch ein Gestänge, ein mittels einer Spindel betätigbarer Hebel oder ein Seil sein, das am unteren Ende einer Welle aufgewickelt wird.

Ausführungsbeispiele der Erfindung werden nachfolgend anhand der Zeichnung näher erläutert. Im einzelnen zeigt
Fig. 1 die Seitenansicht eines Umwälzbelüfters und eine Flüssigdunggrube im Schnitt,
Fig. 2 die Draufsicht der Anordnung nach Fig. 1,
Fig. 3 einen Querschnitt III–III des in den Flüssigdung eingetauchten Teils dieses Umwälzbelüfters und
Fig. 4 einen weiteren Umwälzbelüfter in schematischer Darstellung.

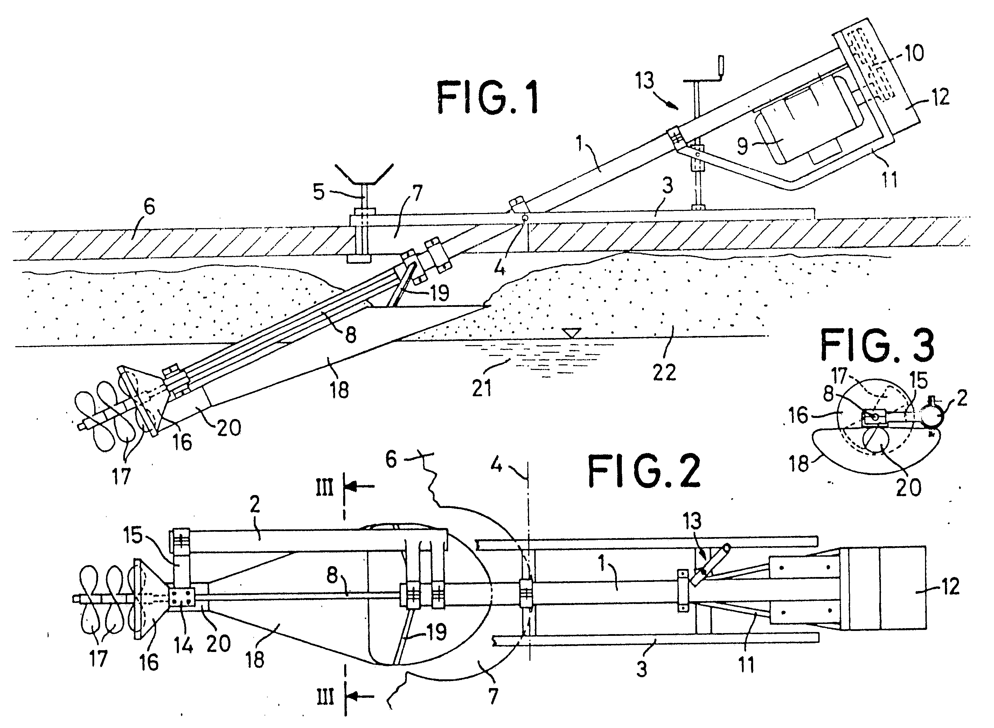

Das Lagergestell des dargestellten Umwälzbelüfters besteht im wesentlichen aus einem Lagerrohr 1 und einem dieses parallel verlängernden Tragrohr 2 und ist gegenüber einem Grundgestell 3 um eine horizontale Achse 4 schwenkbar. Das Grundgestell 3 besteht aus zwei Auflageschienen, die durch Querstreben miteinander verbunden sind. Es ist mittels einer Schraubzwinge 5 an der Betondecke 6 einer Flüssigdunggrube festgespannt, wobei die Schraubzwinge 5 am linken Rand einer Öffnung 7 der Betondecke angesetzt ist. Die Betondecke 6 und das Grundgestell 3 sind im linken Teil der Fig. 2 weggelassen.

In dem schräg geneigt durch die Öffnung 7 geführten Lagerrohr 1 ist eine Welle 8 gelagert. Diese wird an ihrem oberen Ende von einem an dem Lagerrohr 1 befestigten Elektromotor 9 über ein Keilriemengetriebe 10 angetrieben. Der Elektromotor ist von zwei Schutzbügeln 11 überspannt, an denen eine Schutzhaube 12 für die Riemenscheiben befestigt ist. Mittels einer Stellvorrichtung 13, welche das Lagergestell 1 abstützt, kann die Neigung der Welle 8 verstellt werden.

Mindestens das untere Drittel der Welle 8 ragt über das Lagerrohr 1 hinaus und ist offen geführt. Ein zweischaliges Hartholzlager 14, das an einer Traverse 15 des Tragrohres 2 angebracht ist, fängt diesen unteren Teil der Propellerwelle ab. An dem Holzlager 14 sitzt eine kegelförmig gestaltete Haube 16, welche den oberen von drei unmittelbar aneinandergerückt auf dem Ende der Welle 8 befestigten Propellern 17 etwa zur Hälfte umschliesst.

Ein Schaumtrichter 18, der oben mittels zweier Streben 19 am Lagerrohr 1 befestigt ist, mündet mit einem an seinem unteren Ende angeschlossenen etwa achsparallelen Ansaugstutzen 20 exzentrisch in die Haube 16. Der aus Fig. 3 ersichtliche Querschnitt des Schaumtrichtes 18 hat etwa die Form eines Kreisabschnittes mit ausgerundeten Ecken. Der Schaumtrichter 18 befindet sich unter der Propellerwelle 8 und ist derart schräg abgeschnitten, dass der Rand der Trichtereinlauföffnung etwa in einer horizontalen Ebene liegt.

Der untere Teil des Umwälzbelüfters ist in den Flüssigdung 21 eingetaucht, wobei der Flüssigkeitsspiegel etwa 5 bis 20 cm über den Propellern 17 und in einem deutlichen Abstand unter dem Einlaufrand des Schaumtrichters 18 liegt. Aus der Form und Anordnung des Schaumtrichters 18 ergibt sich, dass die Trichtereinlauföffnung annähernd unter der Grubenöffnung 7 liegt. Auf diese Weise wird erreicht, dass der Schaum 22 die Grubenöffnung nicht verschliesst und stets Frischluft

von aussen durch den Schaumtrichter 18 angesaugt und in den Flüssigdung eingebracht werden kann. Sollte jedoch einmal eine aussergewöhnlich starke Schaumentwicklung auftreten, was beim Zusammentreffen gewisser Witterungs- und Temperaturbedingungen unvermutet geschehen kann, so vermag der grosse Schaumtrichter beträchtliche Schaummengen einzusaugen und zu verhindern, dass der Schaum aus der Grube austritt und sonstige Schäden anrichtet.

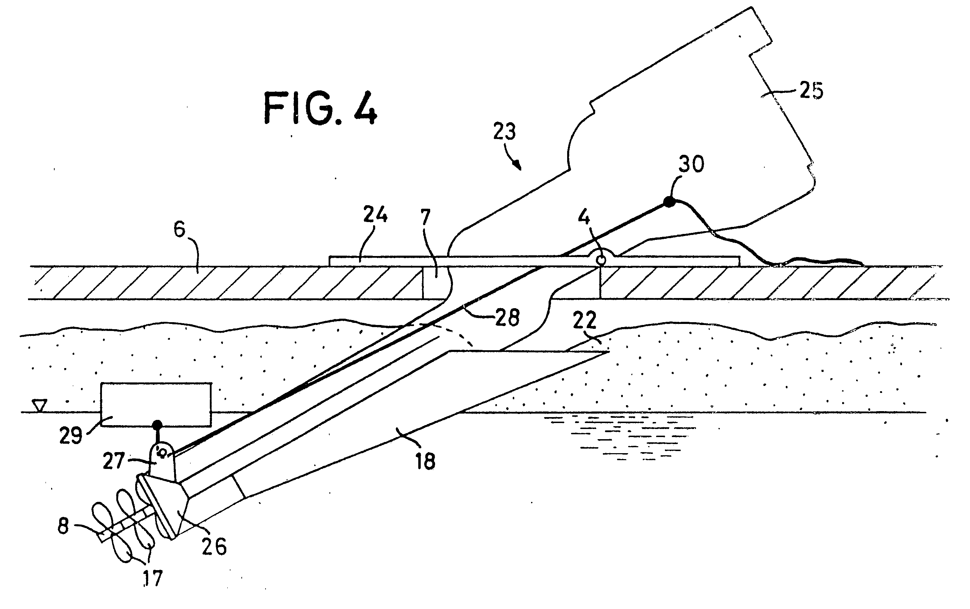

Bei dem Ausführungsbeispiel nach Fig. 4 ist das Lagergestell 23 des Umwälzbelüfters nur mit den Umrissen schematisch dargestellt, ebenso der Grundrahmen 24. Der obere gehäuseförmige Teil 25 des Lagergestells enthält den Motor. Die horizontale Achse, um welche das Lagergestell 23 wippt, ist wie im vorhergehenden Beispiel mit 4 bezeichnet.

Die vom Motor angetriebene Welle 8 trägt drei ziemlich eng aneinandergerückte Propeller 17. Der oberste Propeller ist von einer Haube 26 teilweise abgedeckt, welche Anschlusstutzen für einen Schaumtrichter 18 und eine Zuluft-Schlauchleitung aufweist. Die ausserhalb der Haube 26 befindlichen unteren Propeller saugen schwimmende Feststoffe, z.B. Teile einer verkrusteten Schwimmdecke, an, ziehen sie nach unten und zerschlagen sie. Durch den Schaumtrichter 18 wird der sich bei der Umwälzbelüftung bildende Schaum 22 eingesaugt und vernichtet.

An der Oberseite der Haube 26 ist eine Umlenköse 27, bestehend aus zwei Lappen und einem Querstift, angeordnet. Es könnte auch eine Umlenkrolle sein. Durch diese Umlenköse 27 ist eine Kette 28 gezogen, deren eines Ende an einem Schwimmer 29 befestigt ist. Ausserhalb der Grube ist die Kette 28 in einen schematisch angedeuteten Haken 30 am oberen Teil des Lagergestells 23 eingehängt. Bis dorthin ist die Kette 28 gespannt, da der in der Grube befindliche untere Teil des Lagergestells 23 etwas schwerer als der über der Betondecke 6 befindliche Teil ist und das Übergewicht an dem Schwimmer 29 hängt.

Bevor man den Umwälzbelüfter durch die Öffnung 7 einführt und in die dargestellte Position bringt, wird unter Nachgeben des überschiessenden Teils der Kette 28 zunächst der Schwimmer 29 in die Grube eingelassen, wobei der Schwimmer im Prinzip einen Durchmesser bis zur Grösse der Grubenöffnung haben kann. Aus der gezeichneten Stellung heraus lässt sich durch Anziehen oder Nachlassen der Kette, d.h. Einhängen eines anderen Kettengliedes in den Haken 30 die Tiefe der Propeller 17 bezüglich der Flüssigkeitsoberfläche und gleichzeitig die Neigung der Propellerwelle 8 einstellen.

**Patentansprüche**

1. Umwälzbelüfter für Flüssigkeiten mit mehreren dicht aneinander gerückt auf einer Welle (8) befestigten Propellern (17), einer mit ihrer hohlen Seite den Propellern (17) zugewandten koaxialen Haube (16) und mit einem länglichen, längs der Welle angeordneten Schaumtrichter (18), der mit seinem unteren Ende an der Haube angeschlossen ist, dadurch gekennzeichnet, dass die Welle (8) schräg angeordnet ist, dass sämtliche Propeller (17) axial in gleicher Richtung fördern, dass die Haube (16; 26) nur den oberen Propeller umschliesst, und dass der Schaumtrichter (18) neben der Welle angeordnet und exzentrisch an der Haube angeschlossen ist.

2. Umwälzbelüfter nach Anspruch 1, dadurch gekennzeichnet, dass die Haube (16; 26) kegelförmig ausgebildet ist.

3. Umwälzbelüfter nach Anspruch 1, dadurch gekennzeichnet, dass der Schaumtrichter (18) querschnittlich die Form eines Kreisabschnittes mit ausgerundeten Ecken hat, und dass er mit dem flachen Wandabschnitt nach oben gewendet unter der Welle (8) angeordnet ist.

4. Umwälzbelüfter nach Anspruch 1, dadurch gekennzeichnet, dass an der Haube wenigstens ein weiterer Schaumtrichter oder eine Gaszuleitung exzentrisch angeschlossen ist.

5. Umwälzbelüfter nach Anspruch 3 oder 4, dadurch gekennzeichnet, dass der (18) oder die Schaumtrichter derart abgeschrägt und so angeordnet ist bzw. sind, dass der jeweilige Einlaufrand etwa horizontal und in einem Abstand über dem Flüssigkeitsspiegel liegt.

6. Umwälzbelüfter nach einem der vorhergehenden Ansprüche, dadurch gekennzeichnet, dass der bzw. wenigstens einer der Schaumtrichter mittels eines Rohrgelenks oder eines Schlauchs an der Haube (16) angeschlossen und mit einem Schwimmer ausgerüstet ist, der den Abstand des Einlaufrandes des Schaumtrichters über dem Flüssigkeitsspiegel bestimmt.

7. Umwälzbelüfter nach Anspruch 1, dadurch gekennzeichnet, dass die Propellerwelle (8) in einem Lagergestell (23) gelagert ist, das seinerseits um eine horizontale Achse (4) und gegebenenfalls um eine vertikale Achse schwenkbar gelagert ist, und das ein am oberen Ende des Lagergestells befindlicher Antriebsmotor (10) ein Gegengewicht bildet.

8. Umwälzbelüfter nach Anspruch 7, dadurch gekennzeichnet, dass an dem bezüglich der horizontalen Achse (4) unteren Teil des Lagergestells (23) ein Schwimmer (29) mittels eines Verbindungsorgans (28) angebunden ist, dessen Länge sich am oberen Teil des Lagergestells einstellen lässt.

9. Umwälzbelüfter nach Anspruch 8, dadurch gekennzeichnet, dass ein als Verbindungsorgan verwendeter Zugstrang (28) mit einem Ende an dem Schwimmer (29) befestigt, über ein am unteren Teil des Lagergestells (23) angebrachtes Umlenkorgan (27) geführt und mit dem anderen Ende am oberen Teil des Lagergestells verstellbar festgelegt (30) ist.

**Revendications**

1. Aérateur pour liquides faisant circuler ceux- ci comprenant plusieurs hélices (17) montées très rapprochées sur un arbre (8), un chapeau coaxial (16) dont la face concave est dirigée vers les hélices (17) et un entonnoir à mousse (18) disposé le long de l'arbre et dont l'extrémité inférieure est raccordé au chapeau, caractérisé en ce que l'arbre (8) est incliné, que tous les hélices poussent dans la même direction axiale, que le chapeau (16; 26) n'enveloppe que l'hélice supérieure et que l'entonnoir à mousse (18) est disposé à côté de l'arbre et raccordé excentriquement au chapeau.

2. Aérateur suivant la revendication 1, caractérisé par la forme conique du chapeau (16; 26).

3. Aérateur suivant la revendication 1, caractérisé en ce que la section transversale de l'entonnoir à mousse a la forme d'un segment de cercle avec des angles arrondis et que l'entonnoir à mousse est disposé en-dessous de l'arbre (8) avec la partie plate dirigé vers le haut.

4. Aérateur suivant la revendication 1, caractérisé en ce qu'au moins un entonnoir à mousse additionel ou une conduite de gaz est raccordé excentriquement au chapeau.

5. Aérateur suivant les revendications 3 ou 4, caractérisé en ce que le ou les entonnoirs à mousse (18) se terminent en sifflet et sont disposé de façon à avoir les bords de leurs ouvertures d'entrée approximativement horizontales et au-dessus du niveau du liquide.

6. Aérateur suivant une quelconque des revendications précédentes, caractérisé en ce que l'entonnoir ou au moins un des entonnoirs à mousse est raccordé au chapeau (16) à l'aide d'un accouplement articulé ou un tuyau flexible et est pourvu d'un flotteur maintenant la distance entre l'ouverture d'entrée et le niveau du liquide.

7. Aérateur suivant la revendication 1, caractérisé en ce que l'arbre (8) porte-hélices est monté sur un support (23) pivotant autour d'un axe horizontal (4) et éventuellement autour d'un axe vertical additionel et qu'un moteur (10) se trouvant à l'extrémité supérieure du support fait contrepoids.

8. Aérateur suivant la revendication 7, caractérisé par la présence d'un flotteur (29) relié à la partie du support (23) se trouvant en-dessous de l'axe (4) par un élément de liaison (28) dont la longueur peut être ajusté à la partie supérieure du support.

9. Aérateur suivant la revendication 8, caractérisé en ce qu'une extrémité d'un trait servant d'élément de liaison (28) est fixé à un flotteur (29), le trait passant ensuite par un organe de renvoi (27) solidaire de la partie inférieure du support (23), et que l'autre extrémité du trait est fixé de façon ajustable (30) à la partie supérieure du support.

## Claims

1. An aerator for liquids circulating same and comprising several propellers (17) mounted closely to each other on a shaft (8), a coaxial cap (16) the concave side of which is directed towards the propellers (17) and an elongated foam funnel (18) arranged along the shaft and the lower end of which is connected to the cap, characterized in that the shaft (8) is arranged in a sloping position, that all propellers (17) feed axially in the same direction, that the cap (16; 26) envelops only the upper propeller and that the foam funnel (18) is arranged by the side of the shaft and connected eccentricly to the cap.

2. An aerator according to claim 1, characterized in that the cap (16; 26) is conically shaped.

3. An aerator according to claim 1, characterized in that the foam funnel (18) cross section has the form of a segment of a circle with rounded corners and that the foam funnel is arranged underneath the shaft (8) with its flat wall directed upward.

4. An aerator according to claim 1, characterized in that at least one additional foam funnel or gas supply pipe line is connected eccentricly to the cap.

5. An aerator according to claims 3 or 4, characterized in that the foam funnel (18) or the foam funnels are bevelled and arranged in such a way that the entrance edge or edges are substantially horizontal and in distance above the liquid level.

6. An aerator according to one of the preceding claims, characterized in that the foam funnel, respectively one of the foam funnels is connected to the cap (16) by means of a pivot-type pipe coupling or a hose and is equipped with a float maintaining the distance between the entrance edge and the liquid level.

7. An aerator according to claim 1, characterized in that the propeller shaft (8) is mounted on a support (23) said support being pivoting around a horizontal axis (4) and, alternatively, around an additional vertical axis and that a motor (10) at the upper end of the support acts as a counterweight.

8. An aerator according to claim 7, characterized in that a connecting means (28) connects a float (29) to the portion of the support (23) being underneath the horizontal axis (4), said connecting means being adjustable relative to the upper portion of the support.

9. An aerator according to claim 8, characterized in that a traction strand serving as connecting means (28) is connected with its one end to the float (29), passes through a guide means (27) affixed to the lower portion of the support (23) and is connected adjustably (30) to the upper portion of the support.

# FIG.1

# FIG.2

# FIG.3

# FIG. 4